# EUROPEAN PATENT APPLICATION

(11) **EP 1 346 637 A1**
(43) Date of publication of application: **24.09.2003**
(21) Application number: 01982495.2
(22) Date of filing: 31.10.2001
(51) Int. Cl.: A01M 7/00, B05B 12/02, G05D 7/06

(54) **METHOD AND DEVICE FOR FLOW RATE REGULATION IN A HYDRAULIC PHYTOSANITARY PRODUCT SPRAYING DEVICE**

(30) Priority: 16.11.2000 ES 200002753
(71) Applicant: Justribo Baradad, Antonio, 25100 Almacelles (ES)
(72) Inventor: JUSTRIBO BARADAD, Antonio, E-25100 Almacelles (ES); PALACIN ROCA, Jordi, E-25100 Almacelles (ES); ZANUY FONTANET, Carles, E-25100 Almacelles (ES); ARNO SATORRA, Jaume, E-25100 Almacelles (ES)
(74) Representative: Manresa Val, Manuel
(86) International application number: ES0100413
(87) International publication number: WO02039814

(57) **Abstract**

Method and device to regulate the flow for a hydraulic spraying equipment for phytosanitary products, applied to keep constant the volume applied per unit of surface, as well in straight paths as in paths resulting from the machine turns, by means of a pulsed spraying system, achieving to make suitable the flow of each nozzle (16) according to the effective speed thereof, comprising two differential speed sensors (17), a central electronic unit (20) with microprocessor, actuators and a control panel (15) individually controlled for each nozzle (16) the flow of each nozzle (16) being regulated changing the time during which corresponding electrovalve (15) is in open state and there exists means for generating alarms when the speed of at least one of the nozzle is unsuitable, making possible to take a correcting step.

## Description

### Scope of the invention

This invention refers to a method to regulate the flow for a hydraulic spraying equipment for phytosanitary products, and more particularly to a method to regulate the flow for an agricultural equipment for hydraulic spraying of phytosanitary products of the kind which comprises an application bar provided with multiple nozzles which are moving on a land to be treated either on a self-propelled platform or drawn by a tractor o mounted on the said tractor.

Throughout this text, it will be understood that bar or application bar is an elongated structure bearing a duct to which distributing nozzles are connected and the said structure being generally crosswise the forward direction.

### Background of the invention

Spraying phytosanitary products on agricultural crops is a widely spread practice and shows multiple advantages for the farmers. Applying phytosanitary products involves a significant risk of environmental impact and this fact is the cause that presently it is tried to promote the development of systems of application which minimize these possible negative effects.

For applying phytosanitary products on low crops usually a hydraulic spraying equipment is used , which generically consists of a tank of liquid to be sprayed, 2a supporting bar provided with multiple spraying nozzles and a pump for impelling the liquid from the tank to the nozzles. This spaying equipment assembly is generally mounted on a tractor or on an independent platform drawn by a tractor or self-propelled.

In the spraying equipments of this kind of the prior art, the regulation of the volume of the liquid applied per unit of surface as well as the control and/or maintenance of a volume per unit of constant surface, depends on three basic parameters, i.e.:
- the working pressure (p);
- the flow of the nozzles (q) or of the bar (Q); and
- the forward working speed of the spraying equipment (v) .

Apparatuses are known which have available a pressure regulation system which provides a constant working pressure (PC) built in the equipment, which has the advantage that the angle of departure and the pattern (distribution of the sizes of the drop) of the liquid sprayed is kept substantially constant and therefore, they can be set at a level wished knowing the characteristics of the nozzles and selecting a constant suitable working pressure. However, with a constant working pressure (PC), for keeping even the volume of liquid applied per unit of surface (Y) it is necessary to also keep constant the forward working speed of the spraying equipment (V), which is a serious drawback.

On the other hand, machines are also known which have a built-in pressure regulation system which provides a proportional distribution either of the revolutions of the motor (DPM) or to the equipment forward travel (DPA) therefore achieving to keep constant the volume applied per unit of surface (V), regardless of the speed (v) of the machine. However, due to the fact that in this case the regulation is carried out by varying the pressure of the liquid, the departure angles of the jet from the nozzles vary according to the speed which produces an uneven cross distribution of the liquid sprayed under the bar and produces an unevenness of the size of the drops and of the number of impacts of drop per unit of surface. This unevenness could lead to the application being get off that considered optimum according to the targets of the treatment.

Another regulation system known is that which allows to directly inject the active material (Concentration proportional to CPA Advance). In this system, the phytosanitary product to be applied and a liquid vehicle, typically water, is located in independent circuits and the system mixes them in suitable variable proportions according to the machine travel speed, achieving with it to keep constant the dose applied per unit of surface, keeping the system for spraying the mixture at a constant pressure and therefore allowing to select the departure angle and the size of the drops.

Document US-A-5134961 discloses a device having a nozzle and an electrovalve for an equipment for spraying liquid which allows to spray according to a standard, that is to say, predetermined departure angle and size of the drops and a variable flow. In this device, the said electrovalve comprises an actuator, such as a solenoid, to move valve opening-closing means from a completely open first position and a completely closed second position and means for regulating the said actuator so that the time used for moving the said opening-closing means from the said first position up to the said second position is relatively short with relation to the time in which it remains at the said completely open first position. The said control means comprise a generator of square wave per pulses regulated as well in frequency as in the period of time of the part of the cycle corresponding to the open position. As spraying is carried out at constant pressure, the nozzle connected to the electrovalve releases the liquid sprayed per variable pulses as well in period of time as in frequency keeping the said predetermined standard constant. In this device, means are provided in addition to detect the relative motion or speed of a nozzle with respect to one or several same or different targets to be sprayed, and the possibility to change the release pulse according to the said detection.

However, the said document only mentions the existence of one set of nozzle and electrovalve and, even though it is supposed that multiple nozzles are available associated to an application bar, as the regulation means disclosed has no individualized signal outlet available for each nozzle, the regulation would affect in same way the whole of the set of nozzles connected to the bar although this later discloses, for example, a curved path. This means that this device would only carry out a correct adjustment when the variations of speed are common to all the nozzles, for example, those due to accelerations in straight paths, but when this does not occur, for example in turns carried out by the bar during the treatment, the application would be weak. That is to say, the said document US-A-5134961, does not disclose nor suggest an individualized constant pressure flow regulation, differential for each of a plurality of nozzles associated to a bar which is travelling on a land to be treated, according to the different speeds that can occur between the said nozzles when, for example, the bar is having a curved path.

Document US-A-5653389, by same inventors as the preceding document discloses a system and a method of independent control of flow and size of the drops for a spraying equipment based on the use of sets of pulse-controlled nozzles and electrovalves as above disclosed. The spraying equipment is mounted on a vehicle which can be a road vehicle or an aircraft which can travel consecutively on different areas to be treated. The regulation system includes a memory for storing different reference values of flow and size of the drops introduced by the operator and a subroutine of conversion for the reference values to independently control the said flow and size of the drops as a response to means sensible to the position, such as a GPS system, which receive information on the limits of the areas to be treated and the spraying conditions, that is to say, the reference values to be used, provided for each area. The system is continuously taking into account other parameters, such as the forward speed of the vehicle, the altitude, in the case of an aircraft, the geometry of the spraying equipment, the characteristics of the nozzles and the environmental and weather conditions, to independently adjust the flow and the size of the drops to the reference values. The regulation of the flow is carried out varying the times of open valve at constant period and the control of the size of the drops varying the working pressure.

However, document US-A-5653389 do not either discuss the problem of the different speeds each of the nozzles arranged on a bar of a spraying equipment can reach when it goes forward on a curved path and therefore the system and method this patent discloses provide no solution to the said problem.

Concretely, the said problem lies on the fact that when a hydraulic spraying equipment provided with multiple nozzles arranged along an application bar turns, although the nozzles arranged at the central area of the bar travel virtually at same speed than the tractor equipment, the speed thereof changes as they are taken apart from the centre of the bar towards the ends because of the different turning radius and the different lengths of the paths they must describe. The speed of the nozzles increases the farthest they are located from the centre of the curve and it decreases the nearest they are located from the centre of the curve, it can even be negative at the end of the bar nearest to the pivotal centre when the rotation carried out is very sharp, concretely when such end remains located beyond the instantaneous pivotal centre. In such conditions, if all the nozzles would release same flow, the area of land covered by the speediest area of the bar would receive less liquid per unit of surface than the slowest area.

In theses conditions of use, which are usual during the embodiment of the treatments, the systems of the prior art do not achieve to individually apply the application of each nozzle to their particular working conditions and this provokes an overdose at the internal area of the turn, that is to say the area nearest to the instantaneous pivotal centre, as well as an underdose at the farthest area.

To prevent above mentioned phenomenon, the operators of the spraying equipments provided with conventional regulation systems generally must schedule the applications by means of straight paths and stopping to spray when the machine is duly turning in pitching motion or close to the edges of the plot to be treated and, for this reason, the effectiveness of those known spraying equipments in uneven plots or plots having curved margins is significantly decreased.

A particular case is constituted by the plots watered with (sectorial or central) pivot, in which above mentioned is particularly marked.

There exists therefore the need to develop a regulation system for spraying equipment which makes possible to apply phytosanitary agrochemical products having a volume of liquid evenly applied per unit of surface, regardless of the variations of speed sustained by each nozzle, either due to accelerations of the spraying equipment in straight paths or because of curved paths. However, the applicant is not aware that presently there exists a spraying device which is provided with the said characteristics above mentioned as the best ones.

The object of this invention is to provide a method and a device to regulate the flow for a hydraulic spraying equipment for phytosanitary products of the kind which incorporates a plurality of nozzles arranged along an application bar carried by a vehicle which is travelling on a land to be treated, the said method and device being such that they allow that the operator can carry out the treatment according to an optimum run, regardless of the path thereof, with a predetermined size of the drops and a constant volume of liquid applied per unit of surface.

### Short description of the invention

The method and device of the invention provide a system which individually regulate the flow of each of the nozzles of a hydraulic spraying equipment, so that it is capable to keep constant as well the volume applied per unit of surface as the size of the drops, regardless of the actual speed of each the said nozzles, that is to say, although the equipment would describe non-straight paths. This way the evenness of application is enhanced and the incidence of negative effects on the environment decreases.

The method and system to regulate the flow of this invention comprise a control panel and a central electronic unit, with at least a microprocessor adapted for determining by calculation the speed of the individual run of each of the nozzles arranged along the distributing bar from the speeds of two points spaced from each other on the bar or on an element positionally related with it and the data of the equipment geometry, the two speeds of which are picked up respectively by two speed sensors located at the two mentioned points. According to the speeds calculated, the central electronic unit generates an electronic signal having a square wave to regulate each of the pulse-operated electrovalves associated to the nozzles, the said wave providing variations of the length of the period of time of opening the pulse at a constant frequency. With this, the system independently regulates the flow released by each nozzle according to the forward speed thereof. The process is carried out by keeping a constant working pressure by means of a pressure regulation system which determines a substantially constant range of distribution of drop sizes.

Another characteristic of the invention consists in a safety device implemented in the regulation system itself which releases alarms when the speed of at least one of the nozzles (typically the nozzles located at the ends of the bar) is inappropriate. A first alarm states that the travel speed of some of the nozzles is excessive, that is to say, that for releasing the amount of liquid to be applied per unit of surface wished, it would be necessary that the period of time of pulse opening is longer than the period, which is impossible. This first alarm of excessive speed comprises a visual or sound indication for the operator, who can generate a correcting response, such as for example, to restrain the forward speed and/or enlarge the turning radius. A second alarm indicates that the speed of some of the nozzles is negative, which can occur, for example, when the equipment is turning very sharply and one or more nozzles describe a backward move on already treated areas. This second alarm incorporates, in addition to a visual or sound indication for the operator similar to that disclosed with relation to the first alarm, an automatism which generates the closure of the nozzles.

Also, the invention allows to decrease to the maximum extent the consumption of electrical power of the electrovalves by establishing by means of the said microprocessor, and according to the said stored and acquired data, an optimum dephasing in pulsing the different nozzles in order to prevent that a great number of electrovalves are simultaneously activated.

In short, the invention is composed of a device which allows to keep constant as well the volume applied by unit of surface as the size of the drops, regardless of the path described by the machine (straight or curved, resulting from the turns of the machine), carrying out a regulation in real time of the flow sprayed by each nozzle by means of the regulation by a microprocessor of the pulsing operation of each electrovalve according to the speeds of each of the nozzles calculated by the microprocessor from the speeds of two points known of the equipment picked up by the respective speed sensors.

The pressure with which the liquid arrives to the nozzles is kept constant and to regulate the amount of liquid which must be applied, cycles of opening and closing the electrovalves are carried out which control each nozzle or set of nozzles.

The length of the said cycles will be conditioned by the configuration of the equipment, that is to say, the kind of nozzles, etc. which is to be communicated to the control unit, but, however, these values once they have been established for a concrete equipment, will be kept constant, the variables being which condition the application, dose and travelling speed.

Other characteristics of the invention, as well as the details of its implementation by means of a no-limiting example of embodiment, will become apparent from the description of the drawings below.

### Short description of the drawings

These drawings illustrate as follows:
Fig. 1 is a diagrammatical view of the different elements constituting the invention, relative to a regulation device for the flow in hydraulic spraying equipments for phytosanitary products;

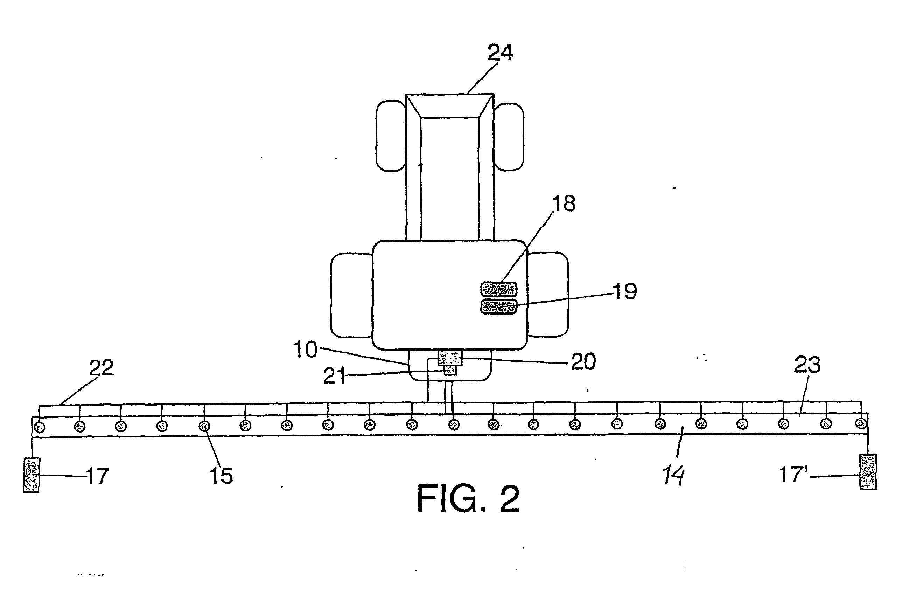

Fig. 2 shows the situation on the tracting-spraying assembly of the main components of the invention;
Fig. 3 illustrates the evenness of application obtained when turning and the product is applied with a conventional spraying equipment;
Fig. 4 shows an operation similar to that illustrated in Fig. 3 but carried out with a spraying equipment provided with the invention;
Fig. 5 is a graphic representation of the differential regulation which occurs in nozzles located on opposite sides of the spraying bar, concretely on the left side in straight forward travel, and the sequence of the electric pulses driving the corresponding electrovalves are noted being it possible to adjust the flow according to the path, which in the case of this figure corresponds to a straight path;
Fig. 6 is a graphic representation corresponding to the nozzle on the right side;
Fig. 7 shows a graphic representation corresponding to a nozzle on the left side when turning to the left;
Fig. 8 is a graphic representation corresponding to a nozzle on the right side;
Fig. 9 shows a representation of the nozzle on the left side when turning to the right;
Fig. 10 shows a graphic representation corresponding to the nozzle on the right side;
Fig. 11 is a diagrammatical plan view showing a moment of the invention performance, concretely when the tracting-spraying vehicle is travelling at high speed and turns to the left, and it can be noted that the nozzles at the right end on the bar exceed the maximum admissible forward speed, the speed alarm being activated at the cabin monitor;
Fig. 12 is a plan view similar to that illustrated in Fig. 11, but when the tracting-spraying vehicle is sharply turning to the left, a backward move being produced, that is to say a negative move of the left end nozzles, the excessive speed and negative speed alarms being activated, this later with the closure of the nozzles electrovalves with negative travel; and
Last, Fig. 13 shows a flow diagram of the flow control routine used by this invention.

### Preferred embodiment of the invention

When looking at these figures, it can be noted how the device for regulating the flow for a hydraulic spraying equipment for phytosanitary products proposed for embodying the method of the invention is configured as a control system for the nozzles of a hydraulic spraying equipment which, when turning, achieves to individually adapt the flow of each nozzle to its travel effective speed according to the relative position it occupies in the spraying bar. The volume applied per unit of surface is kept constant during the treatment, the regulation system used having a constant pressure.

The flow regulation device of this invention is implemented on a spraying equipment of the kind which is travelling on a land to be treated, either self-propelled, drawn by a tractor 24 or mounted on this later, as it is illustrated in the figures. The said equipment comprises a tank 10 for the liquid to be sprayed, a fluid duct impelled by a pump 11 for conducting the liquid from the said tank 10 to the distributing duct supported on a bar 14, to the said distributing duct are connected a plurality of spraying nozzles 16 and a pressure regulation system 12 arranged in the said duct between the said pump 11 and the said bar 14.

The regulation device is of the kind comprising for each of the said spraying nozzles 16 a pulse-operated electrovalve controlled by a central electronic unit 20 under a constant working pressure predetermined by the said pressure regulator 12.

The regulation device in addition comprises two speed sensors 17 located at points spaced from each other of the supporting bar 14 or of an element positionally related with it. The said sensors 17 are prepared for releasing respective speed signals to the said central electronic unit in order that, from the said signals and the known geometry of the spraying equipment, it carries out a calculation of the speeds of each of the said spraying nozzles 16 located along the spraying bar 14 and according to each of the said speeds calculated independently regulates the flow of each of the nozzles 16 changing the period of time of pulse opening at a constant frequency of its corresponding electrovalve 15.

Means associated to the said central electronic unit are prepared for releasing a first alarm comprising an indication for an operator when the travel speed calculated for at least one of the nozzles 16 is excessive for allowing pulse opening time within a period of time required by the corresponding electrovalve 15 and a second alarm comprising an indication for the said operator when the speed calculated for at least one of the nozzles 16 is negative and for generating corresponding electrovalve 15 closing electric signal.

Concretely and for a determined number of cycles of opening-closing per second, the sprayed flow will depend on the concrete period of time reached by the opening pulse with respect to the total of the opening-closing cycle. This period of time of opening is calculated for each nozzle by means of the said microprocessor, which generates the said pulsed electric signal which activates the electrovalves.

When a hydraulic spraying equipment turns, a 'difference of the forward speed of the different nozzles of the spraying bar occurs, and the said difference of speed is caused by the different turning radius the nozzles have to describe with respect to the instantaneous rotation centre which obviously leads to the fact that this difference is sharper when longer is the bar of the spraying equipment.

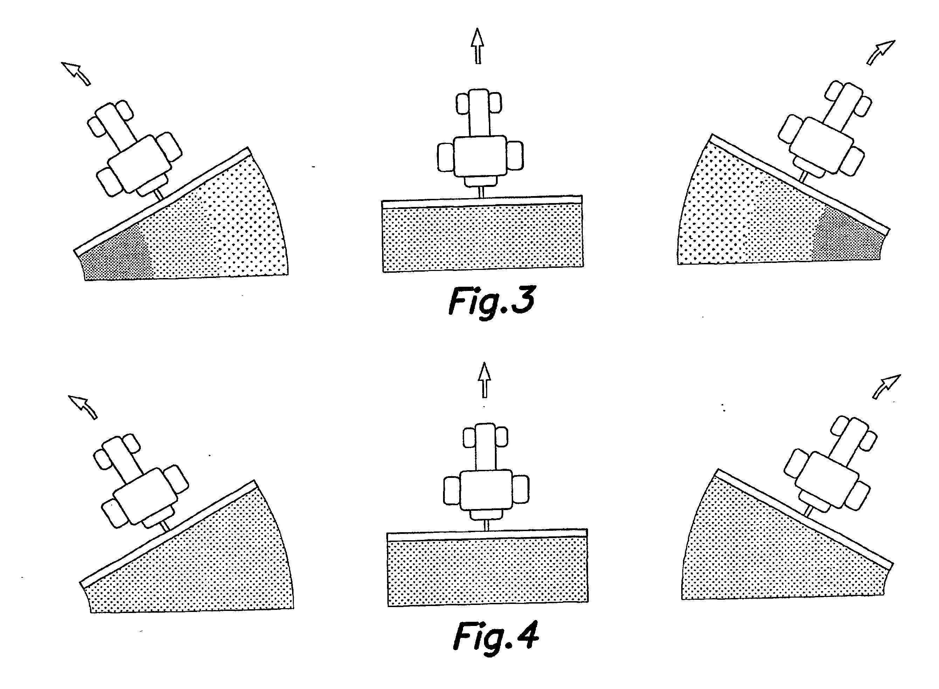

Fig. 3 illustrates the performance of a conventional nozzle, and it can be observed how the surface of the land where the turns as well to the right as to the left occur does not appear correctly treated, while on the surface number 4, where the invention is applied, the surface in every case appears correctly treated, the reason of the suitable treatment being the fact that with this invention the difficulties existing in present mechanisms are overcome, as the flow of each nozzle can be varied in real time making it suitable to its differential speed and to the order specific to the treatment.

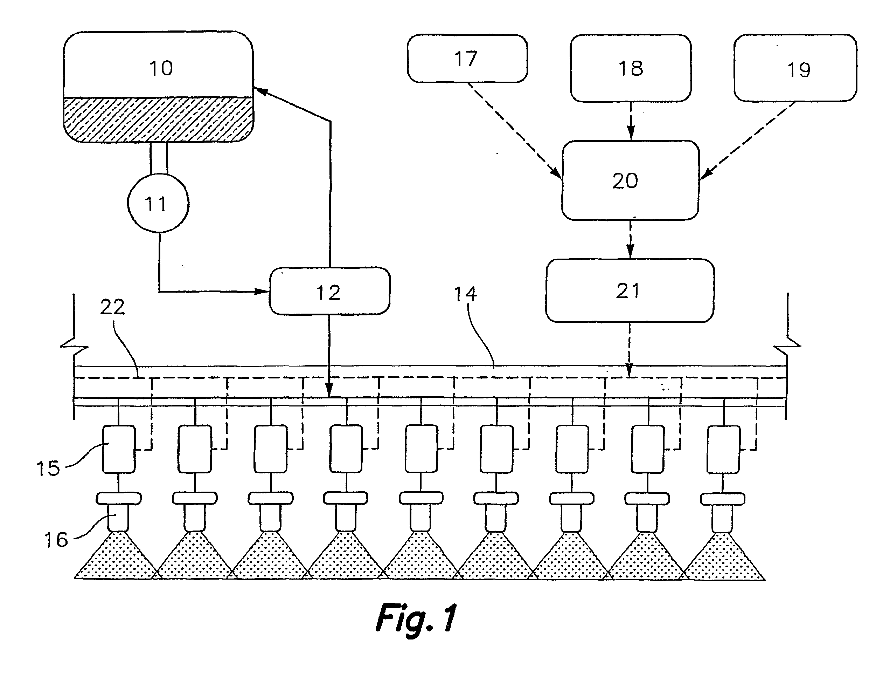

On Fig. 1 a diagram of the mentioned elements is illustrated which compose the invention which can be incorporated on any hydraulic spraying equipment implemented on it, and it must be stated that the invention is configured from a tank 10 which stores the phytosanitary product mixed with a given diluent, called broth, a pump 11 which pumps out and impels the liquid, a regulation system formed by a pressure regulator 12 and its corresponding connection 13 to the tank 10, regardless of being of constant pressure or with distribution proportional to the motor rating, also incorporating a primary distributor and distributors of the sectors of the bar, a supporting bar 14 and the spraying nozzles 16.

On above elements, the invention incorporates a device for measuring the differential speed of the bar 17, a control panel provided with an operator control interface 18 as well as an interface for the equipment 19 configuration, and it must be stated that the device measuring the differential speed of the bar 17 is configured as a speed sensors connected with the module for calculation and application control 20 constituting a central electronic unit, having available a module for adapting the signal and performance 21, the electrovalves 16 and the connection wiring 22.

From the said speed sensors 17 which are two and strategically placed in the spraying equipment, concretely placed in an element positionally related to the distributing bar or joined to the distributing bar, so that they measure the accurate speed of the bar, the central electronic unit 20 can detect the differential speed which is produced at the level of the nozzles, as well if the machine is travelling in straight line as if the equipment describes a curved path when turning.

In order this is feasible, the said speed sensors 17 must be placed in an element positionally related to the distributing bar or on the said distributing bar.

By means of the control panel, the operator can connect and disconnect the system of control with an off/on switch ordering in real time the volume to be applied through the control interface 18, and it must be stated that the control panel formed by the two interfaces 18 and 19, includes the possibility to draw parameters with the data of the equipment through the interface of configuration 19.

Concretely, the interface 19 allows to set the first kind of nozzles, that is to say the relation flow-pressure, as well as the gap between nozzles and the length of the bar. The gap between the sensors 17 at the medium plane of the tractor must also previously be ordered by means of that module, and also, in the control panel there appears indicators constituting alarm of the equipment operation.

In a preferred embodiment, the said indications will be visual and/or sound emitters to show or release the said first and second alarms of excessive speed and negative speed.

More concretely the said visual indicators comprise control lights of the three possible states of speed: suitable; excessive; and negative, for each of the three nozzles 16 located respectively on the left end, at the middle, and at the right end of the application bar.

The central electronic unit is composed of two modules and from the information of the speed sensors 17 and that ordered in the control panel formed by the control interface 18 and the configuration interface 19, the module of calculation and application control 20 generates for each nozzle or set of nozzles a given sequence of electric pulses for opening-closing its corresponding electrovalve, achieving this way to adapt the flow of each nozzle according to its real travel speed, pulses being generated with a constant frequency, that is to say cycles of opening-closing per second, the variation in the period of time of the open state achieving this regulation.

The module of adaptation of signal and performance 21 is in charge of electrically adapting the pulsed signals of opening-closing of each electrovalve generated by the module of calculation and application control 20, and by means of this adaptation, it is guaranteed that the electric pulses are capable of activating the activating elements, that is to say the electrovalves 15, the activation of the whole of the assembly being carried out through the said wired connection 22.

Fig, 2 illustrates the interconnection of the elements conforming the invention mounted on the tracting-spraying assembly, and it can be noted that the central electronic unit, module of calculation and application control 20 and the module of signal and performance adaptation module 21 which receives, on one hand, the information ordered through the control panel, that is to say, the control interface 18 and the configuration interface 19, and, on the other hand, the signal from the speed sensors 17, suitably arranged.

Acting on the spraying nozzles is achieved by means of the wired junction 22 between the central unit 20, configured by the module of calculation and control and the module of adaptation of signal and performance 21, as well as by due electrovalves 15.

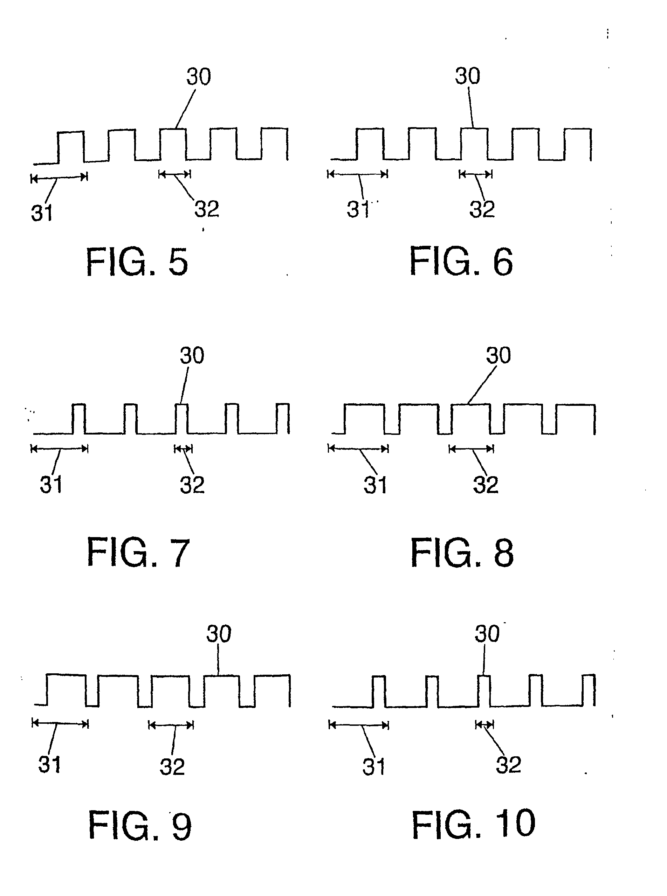

Figures 5, 6, 7, 8, 9 and 10 show the moments of operation of the two hypothetical nozzles located on both sides of the spraying bar, and it can be observed in figures 5 and 6 corresponding to a tracting-spraying vehicle moving forward in straight line, the sequence 30 of electric pulses in both nozzles corresponding to the left side and the right side, is identical, the time of the cycle 31 and the opening time 32 being also identical, it must be indicated that in Fig. 5, it corresponds to the nozzle on the left side and in Fig. 6 to the nozzle on the right side.

For a given frequency of opening-closing pulses per second, the flow sprayed is made suitable to the volume ordered according to the time the electrovalve remains open, that is to say the opening time 32 in both nozzles, the time open 32 coincides guaranteeing same flow and sprayed volume per hectare.

However, when the tracting-spraying assembly turns to the left, as it is shown in figures 7 and 8 corresponding respectively to the nozzles on the left and right sides, the speed of the nozzle situated on the left side, that is to say that corresponding to the shown in Fig. 7, according to the forward direction, results lower than that reached by the nozzle located on the right side, that is to say, that represented in Fig. 8.

In order to keep constant the volume applied per unit of surface, the central unit generates a sequence of opening-closing pulses different for each nozzle or set of nozzles, although the frequency or constant time of cycle 31 remains constant.

Concretely, the nozzle on the left illustrated in Fig. 7 receives a sequence in which the open time 32 decreases, achieving to fit the flow to the real distance travelled, while in the nozzle located on the right side represented in Fig. 8, on the contrary, the opening time of the electrovalve increases, the sprayed flow increasing in such a proportion that it also assures the volume ordered per hectare.

However, when it is turned to the right, as illustrated in figures 9 and 10, the opening time 32 is configured in a way opposite to those illustrated in figures 7 and 8.

According on the pulsed operation a wide range of variation of the flow sprayed by each nozzle is achieved, and two punctual situations can occur in which the limits of the said range are exceeded by default or by excess.

For a given kind of nozzles and operating pressure, the flow sprayed can vary continuously from 0, when the open time is nihil and a maximum value corresponding to the flow released at the working pressure, when the electrovalve is permanently open, that is to say, when the open time coincides with the time of the cycle.

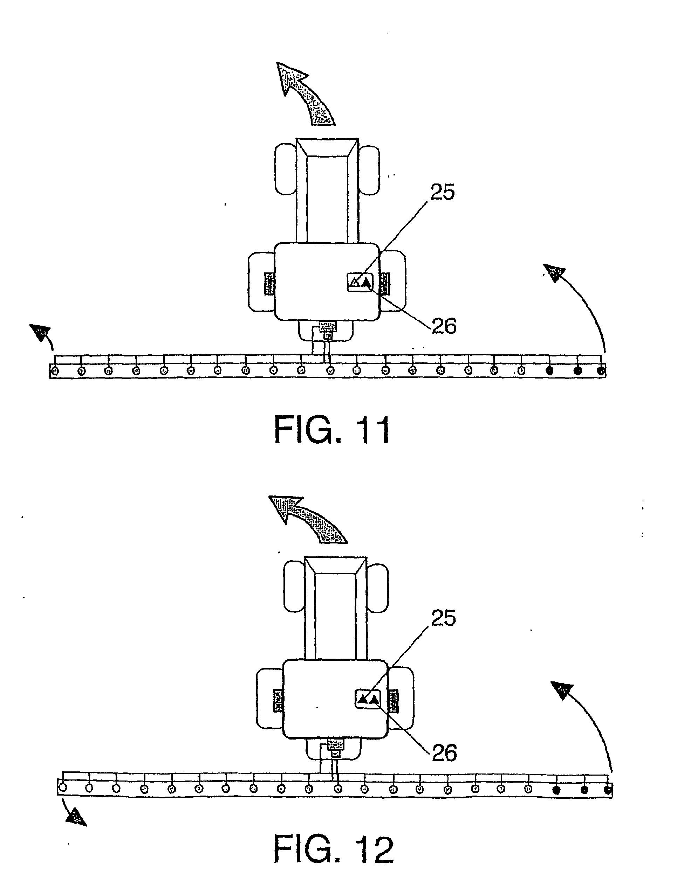

Therefore and for a given volume which has to be applied per hectare, there exists a forward working speed which requires the nozzle continuous working , that is to say, a non pulsed operation, and if the said maximum speed is exceeded, either in the whole of the nozzles of the bar when the treatment is carried out at an excessive speed and in straight line, or in certain nozzles at the end of the bar when a turn is performed, as illustrated in Fig. 11, the volume applied per unit of surface will be ranging below the ordered value.

When above mentioned occurs, the control system warns the operator by means of an indicator of alarm 26 located on the control panel 18, concretely located at the operator control interface 18.

The contrary effect can occur when, due to the action of a very sharp turn, some nozzles of the internal end of the bar move backwards, that is to say, negative speed, in the direction opposite to the forwards direction and as it is illustrated in Fig. 12, it must be stated that, obviously, this effect is higher in the equipments having very long bars, and in this case the invention is not only capable of warning the operator by means of the alarm 25, but it automatically closes the nozzles affected, preventing that the already treated areas are sprayed.

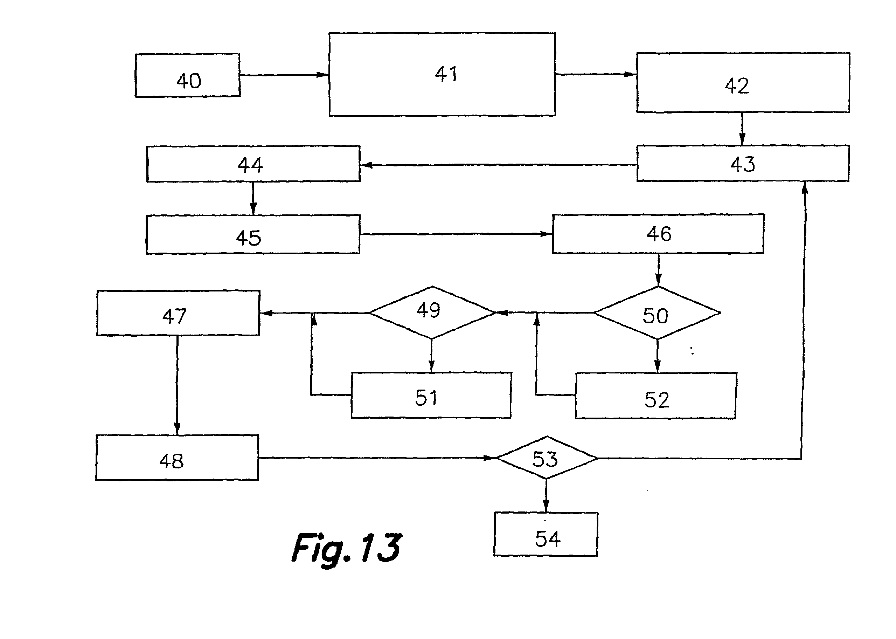

As already above mentioned the central electronic unit, that is to say the microprocessor is the unit in charge of carrying out the control and adjustment process of the opening-closing pulses of the electrovalves, the flow describing the calculation and control algorithm of this microprocessor is illustrated in the diagram shown in Fig. 13.

The process of control being started, the electronic unit carries out, first, a reading of the starting data, that is to say, data on the equipment and the treatment, the said data remaining invariable along a same phytosanitary treatment, therefore the microprocessor only records and stores them at the beginning of the application.

Concretely, the data of the equipment which must be configured are the length of the spraying bar, the gap between the nozzles, the kind of nozzles, the relation flow-pressure being contemplated as well as the position or gap between the speed sensors.

As data of the treatment have to be ordered the volume which is to be applied per hectare, the working pressure and the frequency of pulses of the electrovalves, that is to say, the opening-closing cycles per second.

From these data, the central unit calculates the position of each nozzle on the spraying bar, the flow it releases in a continuous service, because the electrovalve remains permanently open and the maximum working speed, concretely the speed to which each nozzle can travel, according to the volume per unit of surface ordered.

In addition, and in order to prevent that a great number of electrovalves is simultaneously activated, the microprocessor establishes an optimum dephasing in the pulse of the nozzles and all these values calculated will not be modified along a same application.

Once the spraying equipment is started, the control and regulation loop is started, as the position of the different nozzles and the position of the speed sensors are known, the central electronic unit can establish the differential speed of each nozzle, from the signals supplied by the two speed sensors.

The travel speeds of each of the nozzles being known at every moment, the microprocessor checks the existence of nozzles the speed of which is higher that the maximum working speed, and if this happens, the maximum speed alarm 26 is released on the control panel, constituted by the operator control interface 18, and this way, the operator notes that fact and he shall decrease the tractor speed if he wishes to guarantee the volume ordered and a correct application evenness, because the nozzles affected will be continuously open, spraying the flow corresponding to the selected working pressure.

Except these punctual cases, that is to say, nozzles having excessive and/or negative speeds, the central electronic unit makes conveniently suitable the flow of each nozzle according to the data of treatment, and as are known the volume to be applied per hectare, the speed of each nozzle and the flow in continuous service, that is to say permanently open nozzle, the microprocessor calculates the effective spraying time, time open, for each of the nozzles of the spraying bar and last, the central electronic unit itself generates an individualized sequence of electric pulses, that is to say, of opening-closing, responsible of the end activation of the control electrovalves.

The loop ends with a double possibility. That is to say:
- The operator ending the control if it is wished so by means of the on/off switch.
- Newly starting the said control from the information coming from the two speed sensors.

In order to clarify the performance of the invention, a block diagram has been illustrated in Fig. 13 in which appears how from the beginning of the start 40 the invention carries out a reading of parameters 41 checking the number of cycles/second, the gap of the speed sensors and of the emitters, the length of the spraying bar, the rated flow of the sensors, etc. passing the information to the block of calculation of parameters 42, in which the calculation of the positions of the emitters is carried out, passing from block 42 to block 43 designed to read parameters, that is to say the dose which has to be applied per hectare, from which the information is sent to the block 44 corresponding to the calculation of parameters, in which due calculations of the maximum forward speed is carried out and from this block 44 the information is newly sent to another block for reading parameters 45 in which are checked the speeds of the right and left sensors for later on passing to a block for calculating parameters 46 in which the calculation of the individual speeds of the emitters is carried out, intercommunicated with the block 50 in which the speed of the emitter higher than the maximum speed is checked, and from this to block 49 where the emitter speed is reflected passing this information to another block for calculating parameters 47 where the calculation of the emitters application time is carried out, and from this to the actuating block 49 where the output of the application times is generated, the block 48 being communicated with the block 53 where the detection orders are released, while blocks 49 and 50 are communicated respectively with blocks 51 and 52 relative to the performances for opening the alarm with negative speed or for opening the alarm with excessive speed, respectively.

The stopping block is interconnected with the block of parameters reading 43 and at same time with the actuating block 54 where corresponding orders to consider ended or to end the operation or performance of the invention are released.

## Claims

1. Method to regulate the flow for a hydraulic spraying equipment for phytosanitary products the said spraying equipment being of the kind which is moving on a land to be treated either self-propelled or drawn by a tractor (24) or mounted on it and which comprises a tank (10) of liquid to be sprayed a fluid duct impelled by a pump (11) for conducting the liquid from the said tank (10) to a distributing duct supported on a bar (14), to the said distributing duct are connected a plurality of spraying nozzles (16) a pulse-operated electrovalve (15) connected to each of the said nozzles (16) and regulated by a central electronic unit and a pressure control system (12) arranged on the said duct between the said pump (11) and the said bar (14) the said regulation method being of the kind which comprises to regulate the said pulse-operation of the said electrovalves (15) according to parameters predetermined and/or acquired during the travel of the spraying equipment, under a constant working pressure preset by means of the said pressure regulator (12) , the regulation method being **characterized in that** it comprises following steps:
calculating, by means of a calculation and control module (20) built in a microprocessor comprised in the said central electronic unit, the speeds of each of the said spraying nozzles (16) located along bar (14) from known data of the spraying equipment geometry and data referring to the speeds of two points distant to each other of the supporting bar (14) or of an element positionally related to it, acquired by means of two speed sensors (17) located at the said points;
generating, by means of the said calculation and control module (20) pulsed electric signals to change the period of time of the opening of the pulse of each electrovalve (15) operating at a constant frequency according to the speed calculated for its corresponding nozzle (16), in order so that to independently regulate the flow of each nozzle (16) according to the speed thereof; and
in the event that at least one of the said speeds is excessive or negative, release from the said central electronic unit alarms which can generate a correcting action either automatic and/or by an operator
so that the volume of liquid applied per unit of surface is kept substantially constant regardless of the speed variations of each of the multiple nozzles (16) with respect to the land.

2. Method according to claim 1, **characterized in that** the said alarm of excessive speed comprises an indication for the said operator when the travelling speed calculated for at least one of the nozzles (16) is excessive in order that with a period of time of the pulse opening equal to the period the amount of liquid applied per unit of surface can be the amount wished.

3. Method according to claim 1, **characterized in that** the said alarm of negative speed comprises an indication for an operator when the travelling speed calculated for at least one of the nozzles (16) is negative, and the generation of an electric signal to close the said nozzle (16) which is at least one.

4. Method, according to claim 1, **characterized in that** it comprises adapting the pulsed signals generated by the said central electronic unit to the electrical characteristics of the electrovalves (15) by means of a module for adapting signal and performance (21).

5. Method, according to claim 1, **characterized in that** it comprises the prior step of storing in the said microprocessor data referring to the treatment to be applied , such as the volume of liquid to apply per unit of surface, the working pressure and the pulse frequency of the electrovalves, data referring to the characteristics of the spraying equipment , such as the size of the nozzles (16) and data referring to the geometry of the spraying equipment such as the length of the bar (14), gap between the nozzles (16) and position of the speed sensors (17)
introduced by the operator through an interface for configuring the equipment (19) included on a control panel.

6. Method, according to claim 1, **characterized in that** it comprises the optional step of stopping the operation of a selected number of electrovalves (15) gradually starting from any of the ends of the bar (14) or both, when due to application requirements one or both of the said bar ends pass on an already treated area or on an area it is not wished to treat, the said passage being ordered by the operator through a suitable control.

7. Method, according to claim 5, **characterized in that** it comprises the optional step of establishing by means of the said microprocessor and according to the said stored and acquired data, an optimum de-phasing of the pulse of the different nozzles (16) in order to prevent that a great number of electrovalves (15) are simultaneously activated.

8. Device to regulate the flow for a hydraulic spraying equipment for phytosanitary products, the said spraying equipment being of the kind which is travelling on a land to be treated either self-propelled, drawn by a tractor (24) or mounted on it and which comprises a tank (10) for the liquid to be sprayed , a duct of fluid impelled by a pump (11) for conducting the liquid from the said tank (10) up to a distributing duct supported on a bar (14), to the said distributing duct are connected a plurality of spraying nozzles (16) and a pressure regulation system (12) arranged in the said duct between the said pump (11) and the said bar (14), the said regulation device being of the kind which comprises for each of the said spraying nozzles (16) a pulse-operated electrovalve (15) controlled by a central electronic unit under a constant working pressure preset by means of the said pressure regulator (12) the regulation device being **characterized in that** it comprises two speed sensors (17) located at points distant to each other of the supporting bar (14) or of an element positionally related with it, the said sensors (17) are prepared for sending respective speed signals to the said central electronic unit in order that this later, from the said signals and the known geometry of the spraying equipment, carries out a calculation of the speeds of each of the said spraying nozzles (16) located along the spraying bar (14) and according each of the-said speeds calculated independently regulate the flow of each of the nozzles (16) changing the period of time of pulse opening at a constant frequency of its corresponding electrovalve (15), means associated to the said central electronic unit are provided prepared for releasing a first alarm comprising an indication for an operator when the travel speed calculated for at least one of the nozzles (16) is excessive for allowing that the time open of the pulse opening in a period of time required by the corresponding electrovalve (15) provides the flow required and a second alarm comprising an indication for the said operator when the speed calculated for at least one of the nozzles (16) is negative and for generating a closing electric signal of the corresponding electrovalve (15).

9. Device according to claim 8, **characterized in that** the said central electronic unit comprises a microprocessor including a calculation and control module (20) to calculate the said speeds of the nozzles (16) and to generate the said pulsed electric signals to control the electrovalves (15), a dedicated outlet being provided connected to each of the electrovalves (15) for transmitting the said control pulsed electric signals.

10. Device, according to claim 9, **characterized in that** the said central electronic unit comprises a module to adapt signal and performance (21) which adapts the pulsed signals generated by the microprocessor to the electrical characteristics of the electrovalves (15).

11. Device, according to claim 10, **characterized in that** it comprises a control panel including an interface of configuration of the equipment (19) through which the operator can introduce in the said microprocessor data referring to the treatment to be applied., such as volume of liquid to be applied per unit of surface, working pressure and frequency of pulse of the electrovalves, data referring to the characteristics of the spraying equipment, such as size of the nozzles (16) and data referring to the geometry of the spraying equipment, such as length of the bar (14), gap between nozzles (16) and position of speed sensors (17), and an interface of control of the operator (18) by means of which the operator can connect and disconnect the device.

12. Device, according to claim 11, **characterized in that** the said control panel includes visual indicators and/or sound emitters to show or release the said first and second alarms of excessive speed and negative speed.

13. Device, according to claim 12, **characterized in that** the said visual indicators comprise control lights indicating the three possible states of the speed: suitable, excessive and negative, for each of three of the nozzles (16) located respectively on the left end, in the middle and on the right end of the application bar.

14. Device, according to claim 8, **characterized in that** it comprises a control which can be driven by the operator to stop the operation of a selected number of electrovalves (15) from any of the ends of the bar (14) or both, when, due to application requirements, one or both the said ends of the bar pass on an already treated area or an area it is not wished to treat.
